# EUROPÄISCHE PATENTSCHRIFT

(11) **EP 1 834 518 B1**
(45) Veröffentlichungstag und Bekanntmachung des Hinweises auf die Patenterteilung: **15.05.2013**
(21) Anmeldenummer: 07103033.2
(22) Anmeldetag: 26.02.2007
(51) Int. Cl.: A01F 15/18, B65G 39/02

(54) **Stützvorrichtung für eine Rolle, insbesondere einer Rundballenpresse, und Verfahren zum Herstellen einer solchen Rolle**
Support device for a roller, in particular of a round baler, and method for manufacturing such a roller
Dispositif de support pour un rouleau, en particulier une presse à balles rondes, et procédé de fabrication d'un tel rouleau

(30) Priorität: 15.03.2006 DE 102006011777
(43) Veröffentlichungstag der Anmeldung: 19.09.2007
(73) Patentinhaber: Deere & Company, Moline, IL 61265-8098 (US)
(72) Erfinder: Ringenbach, Gilles, 70100 Montureux et Prantigny (FR); Bonfils, Pierre-Alexandre, 45000 Orléans (FR); Barrot, Laurent, 21270 Heuilley-sur-Saône (FR)
(74) Vertreter: Magin, Ludwig Bernhard

(56) Entgegenhaltungen:
- DE-A1- 3 010 607
- DE-A1- 3 205 609
- GB-A- 2 241 558
- US-A- 3 900 913
- US-A- 4 198 804

## Beschreibung

Die Erfindung betrifft eine Stützvorrichtung, eine Rolle mit einer solchen Stützvorrichtung, sowie ein Verfahren zum Herstellen einer solchen Rolle.

Die DE 199 07 290 C1 offenbart eine Rolle für eine Rundballenpresse, die ein Rohr und in diesem mehrere Stützvorrichtungen enthält, die tellerförmig ausgebildet und miteinander verbunden sind. Die Stützvorrichtungen werden mit einem Presssitz in das Rohr eingeschoben und dort axial mit einer Welle oder dergleichen gehalten.

US A 3 900 913 offenbart eine Rolle mit einem Rohr und einer Tragwelle, zwischen denen sich eine fest mit der Tragwelle verbundene Platte und eine an diese axial anlegbare bewegliche Platte befinden. Beide Platten bilden zwischen sich eine keilförmige Ringnut, die durch eine Relativbewegung zwischen beiden Platten verkleinert oder vergrößert werden kann und dabei einen Ring nach außen oder innen verschiebt. Der Ring führt nur zu einer Linienberührung, der Aufbau ist teileaufwendig und Durchbiegungen der Rolle wirken sich auf die Verbindung der festen Platte mit der Tragwelle aus.

Die DE A 32 05 609 zeigt eine Tragrolle mit einem Rohr, einem spreizbaren Tragrohr, einer Tragwelle und einem Dämpfungsglied zwischen der Innenfläche des Rohrs und der Außenfläche des Tragrohrs. Wenn die Tragwelle in das Tragrohr eingeschoben wird, spreizt es sich entlang einer axial verlaufenden Linie und spannt die Dämpfungsglieder vor. Diese Vorrichtung ist nicht zur Aufnahme hoher radialer Kräfte geeignet, weil sie zu einer Ermüdung des Rohrmaterials führt; sie setzt auch voraus, daß eine Tragwelle vorgesehen ist und der gesamte Zwischenraum mit Dämpfungsgliedern gefüllt ist.

Das der Erfindung zugrunde liegende Problem wird darin gesehen, dass ein Presssitz nur mit einem hohen Fertigungsaufwand erzielbar ist und ein vollkommen rundes Rohr voraussetzt, bzw. eine Tragwelle erforderlich ist, um die Stützvorrichtungen an das Rohr anzulegen.

Dieses Problem wird erfindungsgemäß durch die Lehren der Patentansprüche 1, 6 und 11 gelöst, wobei in den jeweiligen weiteren Patentansprüchen Merkmale aufgeführt sind, die die Lösung in vorteilhafter Weise weiterentwickeln.

Auf diese Weise ist weder eine hohe Passgenauigkeit der Stützvorrichtung noch eine vollkommen runde Form des Rohrs erforderlich; vielmehr wird die Stützvorrichtung mit Untermaß, d.h. maximal mit einer Gleitpassung in das Rohr eingeschoben und an der richtigen Stelle radial gespreizt, so dass sie stramm an der Innenfläche des Rohrs zur Anlage kommt und dieses notfalls sogar soweit deformiert, dass eine vollflächige Anlage erreicht wird. Die sich nach außen öffnende Ausnehmung lässt eine Spreizung zu, wobei durch die Bemessung der Ausnehmung sowohl die aufzubringende Kraft, als auch das zum Spreizen verwendbare Werkzeug bestimmt werden. In der einfachsten Form besteht die Stützvorrichtung also aus einer geschlitzten Scheibe. Wenn die Stützvorrichtung in aller Regel auch in ein Rohr mit rundem Querschnitt eingesetzt wird, so ist es doch auch möglich, sie bei entsprechender Ausbildung auch in ein im Querschnitt ovales, vier- oder sechskant oder sonstwie gestaltetes Rohr einzusetzen und zu spreizen.

Wenn zu erwartende Flächenpressungen des Stegs auf das Rohr zu groß werden, empfiehlt es sich, auf die Außenumfangsfläche des Stegs ein Band aufzusetzen und dieses mit ihm zu verbinden, z.B. zu verschweißen, zu verschrauben, zu vernieten, oder dergleichen. Alternativ kann das Band auch eine oder mehrere Ausnehmungen aufweisen, in die der Steg einsetzbar ist.

Anstatt eines geschlitzten Stegs können auch mehrere Stege vorgesehen werden, die zueinander in einer spreizbaren Stellung gehalten werden; z.B. können die Stege auf das Band aufgeschweißt werden.

Die Spreizvorrichtung wird in der gespreizten Stellung gehalten, in der sie kraftschlüssig an der Innenfläche des Rohrs anliegt, indem die Stege oder die Teile des Stegs mittels eines Brückenteils, z.B. eines Stahlstegs, auf Distanz gehalten werden. Ein solcher Brückenteil kann auch aus einer Schraube und einer Mutter bestehen, die jeweils an einem Steg oder Stegteil anliegen und durch Drehung zur Spreizung führen. Eine andere Ausführung besteht aus einer Art Spreizdübel, der in Axialrichtung des Rohrs in die Ausnehmung eingesetzt und durch das Einsetzen einer Schraube, die axial leicht zugänglich ist, gespreizt wird.

Wenn der Brückenteil mit den Bereichen form-, stoff- oder kraftschlüssig verbindbar ist, wird die Spreizstellung eingehalten und der Kraftschluss gesichert.

Eine Spreizung der Stege oder Stegteile kann mittels einer Spreizvorrichtung erfolgen, die als Spreizdübel, oder auch als eine Art Ziehkeil ausgebildet ist und mittels einer Schraube oder dergleichen axial bewegt werden kann.

Eine Rolle, insbesondere einer Rundballenpresse, mit einem Rohr und wenigstens einer Stützvorrichtung wird dadurch gegen Einknicken geschützt, dass sie eine Stützvorrichtung enthält, die in das Rohr einführbar und radial spreizbar ist. Es ist dadurch sehr einfach, die Stützvorrichtung oder mehrere Stützvorrichtungen an der gewünschten Stelle zu positionieren, weil eine Spiel- oder Gleitpassung dies zulässt. Eine solche Stützvorrichtung kann auch nachträglich in ein Rohr eingesetzt werden.

Eine Ausbildung einer Stützvorrichtung besteht darin, dass sie mehrere Anlagekörper bzw. Stege aufweist, die so auf- bzw. zueinander bewegt werden, dass sie sich bei der Bewegung radial voneinander wegbewegen.

Die Spreizbewegung kann auf einfache Weise mittels schräger Anlageflächen eingeleitet werden, die mehr oder weniger lang und steil angeordnet werden können. Derartige schräge Anlageflächen lassen insbesondere eine Umlenkung der Spann- in die Spreizbewegung zu.

Eine sehr flexible Bauweise einer Rolle mit Nachrüstmöglichkeit für die Stützvorrichtung ergibt sich, wenn in die Rolle Stützvorrichtungen eingesetzt werden, die aus einem spreizbaren Steg oder mehreren z.B. von einem Band verbundenen Stegen besteht, die mittels einer Spreizvorrichtung an die Innenfläche des Rohrs an einer gewünschten Stelle andrückbar sind.

Die Rolle wird dadurch in eine Rundballenpresse einbaufertig gemacht, dass an den axialen Endbereichen Wellenstummel mit dem Rohr verbindbar sind. Bei einer entsprechenden Ausbildung der Stützvorrichtung kann auch eine Welle oder Achse durch das gesamte Rohr hindurch geführt werden.

Ein Verfahren zum Herstellen einer Rolle für eine Rundballenpresse setzt sich aus folgenden Schritten zusammen;
a) in ein Rohr werden eine oder mehrere ein- oder mehrteilige Stützvorrichtungen axial eingeschoben und platziert;
b) die Stützvorrichtung(en) werden durch eine Bewegung wenigstens einer der Anlageflächen in der Axialrichtung des Rohrs radial bewegt, bis die Stützvorrichtung spielfrei an der Innenfläche des Rohrs anliegen;
c) die Stützvorrichtung(en) werden in der gespreizten Stellung gehalten.

Dieses Verfahren kann dadurch fortgebildet werden, dass die Stützvorrichtung mittels einer Spreizvorrichtung in die gespreizte Stellung gebracht, in dieser mittels eines Brückenteils in der gespreizten Stellung gesichert und anschließend die Spreizvorrichtung, z.B. ein Spreizkeil, demontiert wird.

In der Zeichnung sind mehrere nachfolgend näher beschriebene Ausführungsbeispiele der Erfindung dargestellt. Es zeigt:
- Fig. 1: eine Rundballenpresse in Seitenansicht mit einer Vielzahl von Rollen,
- Fig. 2: eine Rolle mit mehreren Stützvorrichtungen in ihrem Inneren,
- Fig. 3: eine Stützvorrichtung nach Figur 2 in Vorderansicht;
- Fig. 4: die Stützvorrichtung aus Figur 3 in perspektivischer Ansicht, und
- Fig. 5: eine Stützvorrichtung mit einzelnen Stegen, die mittels einer Spannvorrichtung nach außen bewegt werden.

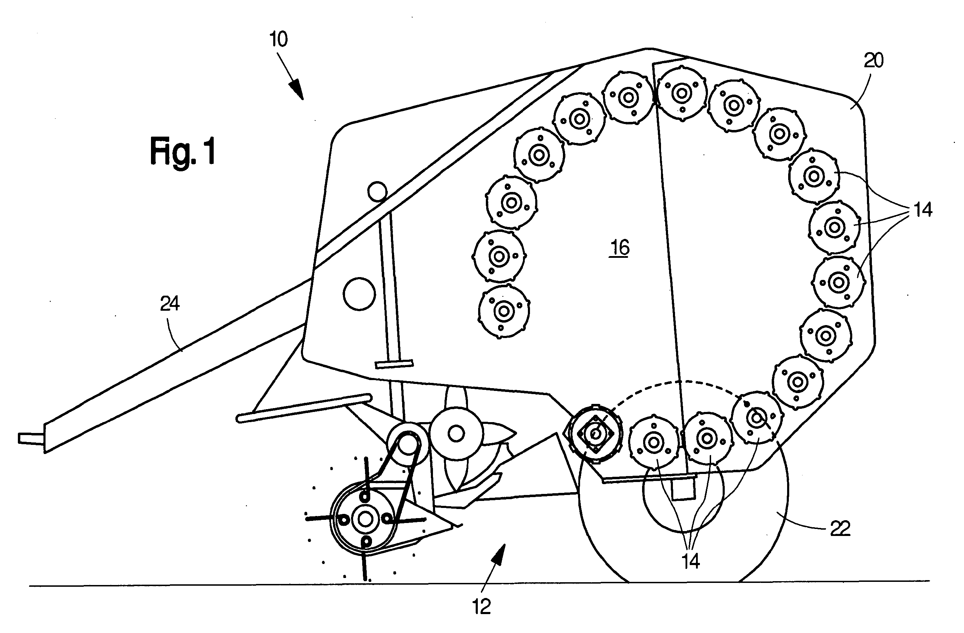

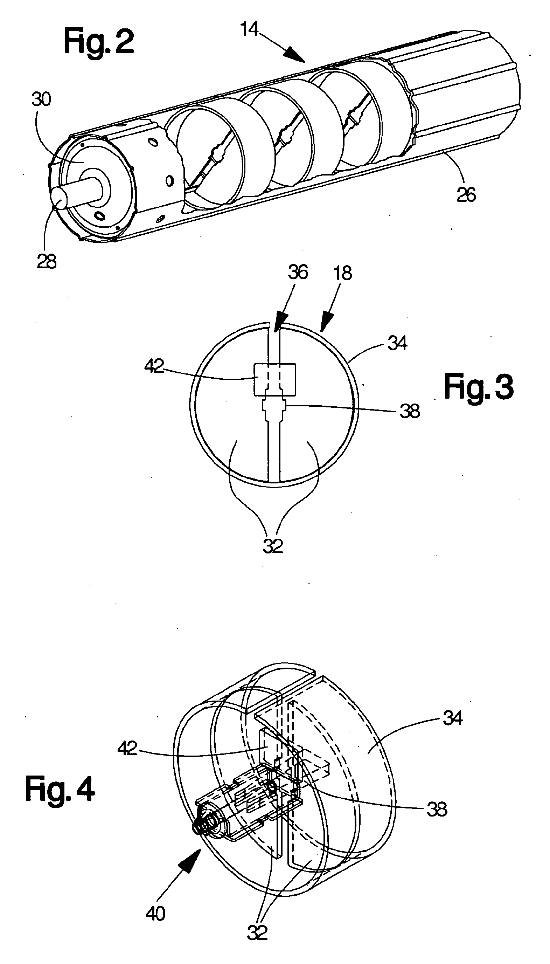

In Figur 1 ist eine Rundballenpresse 10 gezeigt, die ein Fahrwerk 12 und in diesem drehbar gelagerte Rollen 14 enthält. Die Rollen 14 befinden sich im Umfangsbereich eines Pressraums 16 und sind mit einer oder mehreren Stützvorrichtungen 18 (Fig. 2) versehen.

Die Rundballenpresse 10 ist in dem gezeigten Ausführungsbeispiel als eine mit konstant großem Pressraum 16 ausgebildet; dies ist nicht zwingend - es kann auch eine Rundballenpresse 10 mit einem in der Größe veränderbaren Pressraum 16 sein. Das Fahrwerk 12 ist wie üblich ausgebildet und weist Seitenwände 20 auf, die den Pressraum 16 seitlich bedecken und die Rollen 14 drehbar aufnehmen. Räder 22 und eine Deichsel 24 sind an dem Fahrwerk 12 vorgesehen und machen es möglich, die Rundballenpresse 10 hinter einem nicht gezeigten Zugfahrzeug her zu ziehen.

Es können mehrere oder auch nur eine einzige Rolle 14 vorgesehen werden, die jeweils ein Rohr 26, Wellenstummel 28 und eine oder mehrere Stützvorrichtungen 18 aufweisen. Jede Rolle 14 ist um eine Längsmittenachse drehbar, die sich horizontal und quer zur Fahrtrichtung erstreckt. Das Rohr 26 ist aus Stahlblech gebildet, hat eine glatte, profilierte oder mit Mitnehmern bestückte äußere Oberfläche und ist entweder gezogen oder geschweißt ausgebildet. Die Wellenstummel 28 sind - wenn auch nur auf einer Seite gezeigt - in das Rohr 26 mittels einer Nabe 30 eingesetzt und vorzugsweise mit dem Rohr 26 in dessen axialem Endbereich verschweißt und dienen der nicht gezeigten Lagerung in der Seitenwand 20. Die Nabe 30 bzw. der Wellenstummel 28 können auch an einen nicht gezeigten Steg im Rohr 26 angeschraubt oder durch eine sich durch das gesamte Rohr 26 hindurch erstreckende Welle oder Achse ersetzt werden.

Der Pressraum 16 ist geeignet, einen nicht gezeigten Rundballen in sich aufzunehmen, der insbesondere bei Silage ein Gewicht von fast 1000 kg aufweisen kann. Insbesondere dann, wenn eine Rolle 14 im unteren Bereich des Pressraums 16 angeordnet ist, ruht dieses Gewicht auf der Rolle 14 und führt zu einer hohen radialen Last auf das Rohr 26.

Die Stützvorrichtung 18 ist als ein Zusammenbau ausgeführt, der in das Rohr 26 axial eingeführt, positioniert und an die Innenfläche des Rohrs 26 angepresst wird.

Die in den Figuren 2 bis 4 dargestellte Stützvorrichtung 18 enthält zwei Stege 32 und ein Band 34.

Die Stege 32 sind aus Stahl gebildet und verlaufen im eingebauten Zustand radial zu der Längsmittenachse des Rohrs 26. Die Stege 32 haben eine Bemessung, die ausreicht, die auf das Rohr 26 von außen wirkenden Kräfte abzustützen. Zwischen den Stegen 32 besteht eine Aussparung 36 bzw. ein Spalt, deren Funktion später erläutert wird. Die Stege 32 bedecken im Wesentlichen den Querschnitt des Rohrs 26. An einer in diesem Fall mittigen Stelle der Aussparung 36 sind Anlageflächen 38 vorgesehen, die von einer Spreizvorrichtung 40 (sh. Fig. 4) beaufschlagt werden können, wie dies später noch beschrieben wird. Diese Anlageflächen 38 sind vorzugsweise geringfügig angeschrägt, um eine Art schiefe Ebene zu bilden.

Das Band 34 ist ebenfalls aus Stahl gebildet und ist in diesem Ausführungsbeispiel mittig auf die Stege 32 aufgesetzt und mit diesen an seiner Innenseite verschweißt. Das Band 34 ist an einer Stelle, die sich mit der Lage der Ausnehmung 36 deckt, unterbrochen. Im Wesentlichen folgt die Außenform des Bandes 34 der Innenform des Rohrs 26. Das Band 34 bildet mit den Stegen 32 eine bauliche Einheit, die im offenen Bereich der Ausnehmung 36 gespreizt werden kann, was bedeutet, dass das Band 34 im geschlossenen Bereich der Ausnehmung 36 geringfügig gebogen wird.

Die Spreizvorrichtung 40 ist in der einfachsten Form als ein Keil ausgebildet, der mittels einer Gewindeverbindung, mit Hammerschlag oder dergleichen in der Axialrichtung des Rohrs 26 bewegt werden kann. Die Spreizvorrichtung 40 weist vorzugsweise ebenfalls Anlageflächen 38 auf, die mit den Anlageflächen 38 an den Stegen 32 in Wirkverbindung bringbar sind. Aufgrund der Schräge der Anlageflächen 38 und der Relativbewegung zwischen der Spreizvorrichtung 40 und den Stegen 32 kommt es zu einer Bewegungskomponente der Stege 32 in radialer Richtung, wenn die Spreizvorrichtung 40 bewegt wird.

Ein Brückenteil 42 gehört ebenfalls zu der Stützvorrichtung 18, wird allerdings erst im montierten Zustand der Stützvorrichtung 18 angebracht. Bei dem Brückenteil 42 handelt es sich bei dem Ausführungsbeispiel nach den Figuren 2 bis 4 um eine einfache Stahllasche, die beidenends an einen der Stege 32 angeschweißt wird und somit die Stützvorrichtung 18 in ihrer gespreizten Stellung hält.

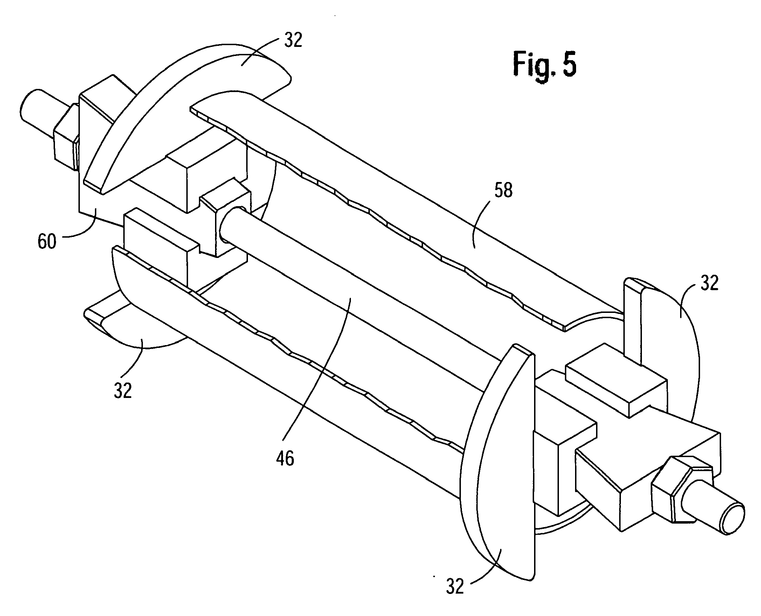

Schließlich ist in Figur 5 ein weiteres Ausführungsbeispiel einer Stützvorrichtung 18 gezeigt, bei dem zwei Paare von Stegen 32 spiegelbildlich radial um eine Spreizvorrichtung 40 angeordnet sind und in axialer Richtung von einer Hülse 58 auf Abstand gehalten werden. Jeder Steg 32 erstreckt sich über etwas weniger als die Hälfte des Querschnitts des Rohrs 26 und weist eine Außenkante auf, die der Innenfläche des Rohrs 26 folgt und sich an diese fest anlegen lässt. In einem radial innenliegenden Bereich ist jeder Steg 32 mit einer Anlagefläche 38 versehen, die zu der Längsmittenachse der Rolle 14 geringfügig geneigt verläuft. Diese Anlagefläche 38 kann flach ausgebildet oder auch von Seitenwänden begrenzt sein und erstreckt sich in diesem Ausführungsbeispiel in axialer Richtung zu beiden Seiten über die Stege 32 hinaus. Die Hülse 58 ist rundzylindrisch und hohl ausgebildet und deckt sich mit den Stegflächen, so dass sie sich an den Stegen 32 im eingebauten Zustand abstützen kann. Eine Spreizvorrichtung 40 enthält wiederum eine Schraube 46, auf die zwei symmetrische Keile 60 aufgeschoben sind. Die Keile 60 weisen Anlageflächen 38 auf, die an die kongruent ausgebildeten und angeordneten Anlageflächen 38 an den Stegen 32 anlegbar sind. Diese Stützvorrichtung 18 wird als ein Zusammenbau außerhalb des Rohrs 26 zusammengestellt, was dadurch geschieht, dass die beiden Keile 60 symmetrisch auf die Schraube 40 aufgeschoben und mittels einer Mutter gesichert werden, dass die Hülse 58 über den mittleren Abschnitt der Schraube 40 geschoben wird, dass die Stege 32 auf die Keile 60 aufgesetzt werden, um eine Scheibe zu bilden und schließlich die Mutter angezogen wird, so dass sich die Stege 32 an die Endflächen der Hülse 58 anlegen und für Montagezwecke ausreichend kraftschlüssig gehalten werden. Anschließend wird die Stützvorrichtung 18 in das Rohr 26 eingeschoben und die Mutter weiter angezogen, so dass sich die Stege 32 radial nach außen bewegen und das Rohr 26 innen abstützen.

Eine mit einer der vorbeschriebenen Stützvorrichtungen 18 versehene Rolle 14 wird wie folgt hergestellt:
a) die Stützvorrichtung 18 wird in vormontiertem Zustand oder in Einzelteilen in das Rohr 26 eingeschoben und platziert;
b) die Stege 32 werden mittels der Spreizvorrichtung 40 radial nach außen bewegt und direkt oder über das Band 34 bzw. die Halbschalen 44 an die Innenfläche des Rohrs 26 angedrückt;
c) die Stützvorrichtung 18 wird in ihrer gespreizten Lage z.B. mittels des Brückenteils 42, mittels einer Mutter oder dergleichen gesichert;
d) schließlich werden die Wellenstummel 28 angebracht, um die Rolle 14, in den Seitenwänden 20 oder dergleichen drehbar zu lagern.

## Patentansprüche

1. Stützvorrichtung (18) mit einer im Wesentlichen zylindrischen, insbesondere einer Kreislinie folgenden Außenfläche, mit wenigstens einem radial verlaufenden mehrere Stegteile aufweisenden Steg (32) mit einer sich zum Umfang öffnenden Ausnehmung (36) oder mit mehreren radial verlaufenden Stegen (32), die zwischen sich eine sich zum Umfang öffnende Ausnehmung bilden und eine radiale Spreizung der Stege (32) oder Stegteile ermöglichen.

2. Stützvorrichtung nach Anspruch 1, **dadurch gekennzeichnet, dass** der Steg (32) auf seinem Außenumfang mit dem Band (34) stoffschlüssig, z.B. durch Schweißen, verbunden ist.

3. Stützvorrichtung nach Anspruch 1 oder 2, **gekennzeichnet durch** einen Brückenteil (42), der mit den seitlich der Ausnehmung (36) befindlichen Bereichen der Stützvorrichtung (18) verbindbar ist.

4. Stützvorrichtung nach einem oder mehreren der vorherigen Ansprüche, **dadurch gekennzeichnet, dass** der Brückenteil (42) mit den Bereichen form-, stoff- oder kraftschlüssig verbindbar ist.

5. Stützvorrichtung nach einem oder mehreren der vorherigen Ansprüche, **dadurch gekennzeichnet, dass** in die Ausnehmung (36) eine Spreizvorrichtung (40) einsetzbar ist.

6. Rolle (14), insbesondere einer Rundballenpresse (10), mit einem Rohr (26) und wenigstens einer Stützvorrichtung (18) nach einem oder mehreren der vorherigen Patentansprüche, die in das Rohr (26) einführbar und radial spreizbar ist.

7. Rolle nach Anspruch 6, **dadurch gekennzeichnet, dass** die Stege (32) oder Stegteile in dem gespreizten Zustand arretierbar sind.

8. Rolle nach Anspruch 6 oder 7, **gekennzeichnet durch** in der Axialrichtung der Rolle (14) verlaufende schräge Anlageflächen (38) an der Stützvorrichtung (18), über die eine radial Spreizbewegung einleitbar ist.

9. Rolle nach einem oder mehreren der vorherigen Ansprüche, **gekennzeichnet durch** wenigstens eine Stützvorrichtung (18) nach einem oder mehreren der Patentansprüche 1 bis 5, die an die Innenumfangsfläche des Rohrs (26) zur Anlage bringbar sind.

10. Rolle nach einem oder mehreren der vorherigen Ansprüche, **dadurch gekennzeichnet, dass** an den axialen Endbereichen Wellenstummel (28) mit dem Rohr (26) verbindbar sind.

11. Verfahren zum Herstellen einer Rolle (14) nach einem oder mehreren der vorherigen Ansprüche, **dadurch gekennzeichnet, dass**:
a) die Stützvorrichtung(en) (18) wenigstens einen radial verlaufenden, mehrere Stegteile aufweisenden Steg (32) mit einer sich zum Umfang öffnenden Ausnehmung (36) oder mehrere radial verlaufende Stege (32) aufweist, die zwischen sich eine sich zum Umfang öffnende Ausnehmung (36) bilden und eine radiale Spreizung der Stege (32) oder Stegteile ermöglichen,
b) die Stege (32) oder Stegteile sowie eine Spreizvorrichtung (40) Anlageflächen (38) aufweisen,
c) in ein Rohr (26) eine oder mehrere ein- oder mehrteilige Stützvorrichtungen (18) axial eingeschoben und platziert werden,
d) die Stützvorrichtung(en) (18) durch eine Bewegung wenigstens einer der Anlageflächen (38) in der Axialrichtung des Rohrs (26) radial bewegt wird, bis die Stützvorrichtung (18) spielfrei an der Innenfläche des Rohrs (26) anliegt,
e) die Stützvorrichtung(en) (18) in der gespreizten Stellung gehalten werden.

## Claims

1. Support device (18) having a substantially cylindrical outer surface that follows in particular a circle line, having at least one radially extending web (32) which has a plurality of web parts, said web (32) having a clearance (36) that opens towards the circumference, or having a plurality of radially extending webs (32) which form between one another a clearance that opens towards the circumference and allow radial spreading of the webs (32) or web parts.

2. Support device according to Claim 1, **characterized in that** the web (32) is connected on its outer circumference cohesively, e.g. by welding, to the band (34).

3. Support device according to Claim 1 or 2, **characterized by** a bridge part (42) which is connectable to those regions of the support device (18) that are located to the sides of the clearance (36).

4. Support device according to one or more of the preceding claims, **characterized in that** the bridge part (42) is connectable to the regions in a form-fitting, cohesive or force-fitting manner.

5. Support device according to one or more of the preceding claims, **characterized in that** a spreading device (40) is insertable into the clearance (36).

6. Roller (14), in particular of a round baler (10), having a tube (26) and at least one support device (18) according to one or more of the preceding claims, which is insertable into the tube (26) and is radially spreadable.

7. Roller according to Claim 6, **characterized in that** the webs (32) or web parts are lockable in the spread state.

8. Roller according to Claim 6 or 7, **characterized by** oblique abutment surfaces (38) on the support device (18) which extend in the axial direction of the roller (14) and via which a radial spreading movement is introducible.

9. Roller according to one or more of Claims 6 to 8, **characterized by** at least one support device (18) according to one or more of Claims 1 to 5, which can be brought into abutment against the inner circumferential surface of the tube (26).

10. Roller according to one or more of Claims 6 to 9, **characterized in that** shaft stubs (28) are connectable to the tube (26) in the axial end regions.

11. Method for producing a roller (14) according to one or more of Claims 6 to 10, **characterized in that**:
a) the support device(s) (18) has/have at least one radially extending web (32) which has a plurality of web parts, said web (32) having a clearance (36) that opens towards the circumference, or has/have a plurality of radially extending webs (32) which form between one another a clearance (36) that opens towards the circumference and allow radial spreading of the webs (32) or web parts,
b) the webs (32) or web parts and a spreading device (40) have abutment surfaces (38),
c) one or more one-part or multi-part support devices (18) are axially introduced and placed into a tube (26),
d) the support device(s) (18) is/are moved radially by a movement of at least one of the abutment surfaces (38) in the axial direction of the tube (26), until the support device (18) butts against the inner surface of the tube (26) without play,
e) the support device(s) (18) is/are held in the spread position.

## Revendications

1. Dispositif de support (18) comprenant une surface extérieure essentiellement cylindrique, en particulier suivant une ligne circulaire, comprenant au moins une nervure (32) s'étendant radialement et comportant plusieurs parties de nervure, ladite nervure présentant un évidement (36) s'ouvrant en direction de la périphérie, ou comprenant plusieurs nervures (32) s'étendant radialement qui forment entre elles un évidement s'ouvrant en direction de la périphérie et permettent un écartement radial des nervures (32) ou des parties de nervure.

2. Dispositif de support selon la revendication 1, **caractérisé en ce que** la nervure (32) est reliée, sur sa périphérie extérieure, à la bande (34) par liaison de matière, par exemple par soudage.

3. Dispositif de support selon la revendication 1 ou 2, **caractérisé par** une partie formant pont (42) qui peut être reliée aux régions du dispositif de support (18) qui se situent latéralement par rapport à l'évidement (36).

4. Dispositif de support selon l'une quelconque ou plusieurs des revendications précédentes, **caractérisé en ce que** la partie formant pont (42) peut être reliée aux régions par complémentarité de formes, par liaison de matière ou par force.

5. Dispositif de support selon l'une quelconque ou plusieurs des revendications précédentes, **caractérisé en ce qu'**un dispositif d'écartement (40) peut être inséré dans l'évidement (36).

6. Rouleau (14), en particulier d'une presse à balles rondes (10), comprenant un tube (26) et au moins un dispositif de support (18) selon l'une quelconque ou plusieurs des revendications précédentes, lequel dispositif de support peut être inséré et écarté radialement dans le tube (26).

7. Rouleau selon la revendication 6, **caractérisé en ce que** les nervures (32) ou les parties de nervure peuvent être bloquées dans l'état écarté.

8. Rouleau selon la revendication 6 ou 7, **caractérisé par** des surfaces d'appui (38) sur le dispositif de support (18), qui sont inclinées et s'étendent dans la direction axiale du rouleau (14), par le biais desquelles un mouvement d'écartement radial peut être introduit.

9. Rouleau selon l'une quelconque ou plusieurs des revendications 6 à 8, **caractérisé par** au moins un dispositif de support (18) selon l'une quelconque ou plusieurs des revendications 1 à 5, lequel dispositif de support peut être amené en appui contre la surface périphérique intérieure du tube (26).

10. Rouleau selon l'une quelconque ou plusieurs des revendications 6 à 9, **caractérisé en ce que** des bouts d'arbre (28) peuvent être reliés au tube (26) au niveau des régions d'extrémité axiales.

11. Procédé de fabrication d'un rouleau (14) selon l'une quelconque ou plusieurs des revendications 6 à 10, **caractérisé en ce que** :
a) le(s) dispositif(s) de support (18) comprend/comprennent au moins une nervure (32) s'étendant radialement et comportant plusieurs parties de nervure, ladite nervure présentant un évidement (36) s'ouvrant en direction de la périphérie, ou comprend/comprennent plusieurs nervures (32) s'étendant radialement qui forment entre elles un évidement (36) s'ouvrant en direction de la périphérie et permettent un écartement radial des nervures (32) ou des parties de nervure,
b) les nervures (32) ou parties de nervure ainsi qu'un dispositif d'écartement (40) comprennent des surfaces d'appui (38),
c) un ou plusieurs dispositifs de support (18) en une seule partie ou en plusieurs parties sont introduits axialement et placés dans un tube (26),
d) le(s) dispositif(s) de support (18) est/sont déplacé(s) radialement par un mouvement d'au moins l'une des surfaces d'appui (38) dans la direction axiale du tube (26), jusqu'à ce que le dispositif de support (18) s'applique sans jeu contre la surface intérieure du tube (26),
e) le(s) dispositif(s) de support (18) est/sont maintenu(s) dans la position écartée.
